# EUROPÄISCHE PATENTSCHRIFT

(11) **EP 1 809 991 B1**
(45) Veröffentlichungstag und Bekanntmachung des Hinweises auf die Patenterteilung: **10.03.2021**
(21) Anmeldenummer: 05810896.0
(22) Anmeldetag: 07.11.2005
(51) Int. Cl.: G01F 23/00, B07C 5/34, G01F 23/26, G01F 23/288, G01F 23/292, G01F 22/00, G01F 25/00

(54) **VERFAHREN ZUR FESTSTELLUNG DER INTEGRITÄT EINES IN EINEM BEHÄLTER BEFINDLICHEN PRODUKTES**
METHOD FOR DETERMINING THE INTEGRITY OF A PRODUCT IN A CONTAINER
PROCEDE POUR VERIFIER L'INTEGRITE D'UN PRODUIT CONTENU DANS UN RECIPIENT

(30) Priorität: 05.11.2004 DE 102004053567
(43) Veröffentlichungstag der Anmeldung: 25.07.2007
(73) Patentinhaber: HEUFT SYSTEMTECHNIK GMBH, 56659 Burgbrohl (DE)
(72) Erfinder: HEUFT, Bernhard, 56659 Burgbrohl (DE)
(74) Vertreter: Gritschneder, Sebastian
(86) Internationale Anmeldenummer: PCT/EP2005/055773
(87) Internationale Veröffentlichungsnummer: WO 2006/048454

(56) Entgegenhaltungen:
- CA-A1- 2 454 748
- DE-A1- 4 115 207
- DE-A1- 4 200 603
- DE-A1- 19 722 837
- US-A- 3 818 232
- US-A- 4 423 628
- US-A- 5 750 998
- US-A1- 2004 000 653

## Beschreibung

### Technisches Umfeld

Die Erfindung betrifft ein Verfahren zur Feststellung der Integrität eines in einem verschlossenen Behälter befindlichen Produktes der Nahrungsmittel- oder Getränkeindustrie, wobei ein vorgegebenes Merkmal des Produktes in dem Behälter mittels einer ersten Messmethode bestimmt wird, die auf einer ersten physikalische Eigenschaft des Produktes basiert.

Bei Produkten in Behältern, z.B. Flüssigkeiten in Flaschen oder einem pulverförmigen Produkt in einer Dose sind mehrere Merkmale von Interesse. Bei Flüssigkeiten in Flaschen, sind Verfahren bekannt, um die Füllhöhe oder den Innendruck zu messen. Die Füllhöhe kann mittels eines breiten Lichtstrahls und einer Mehrzahl in der Höhe gestaffelt angeordneter optischer Sensoren direkt gemessen werden. Daneben existieren auch indirekte Messmethoden, z.B. mittels der Absorption von Röntgen- oder Gammastrahlen oder mittels der Bedämpfung eines hochfrequenten Schwingkreises. Bei der Messung des Füllstands mittels Röntgen- oder Gammastrahlen wird eine Messbrücke, die auf der einen Seiten eines Durchlasses eine Strahlenquelle und auf der gegenüberliegenden Seite des Durchlasses einen Strahlendektektor aufweist, so auf dem Weg der Behälter angeordnet, dass die Soll-Füllhöhe etwa in der Mitte des Strahldurchmessers liegt. Der Strahl kann beispielsweise eine Breite von 2 cm haben. Das Ausmaß der Absorption des Röntgen- oder Gammastrahls hängt von der Füllstandshöhe ab, da bei einem höheren Füllstand ein größerer Anteil des Strahlenquerchnitts von dem Produkt in dem Behälter, z.B. der Flüssigkeit in der Flasche, absorbiert wird. Die vom Detektor gemessene Strahlungsleistung ist also umso höher, je niedriger der Füllstand ist.

Eine wesentliche Störgröße bei dieser Messung ist dadurch gegeben, dass die Absorption der Röntgenstrahlung wesentlich von dem Atomgewicht der in den Molekülen des Produktes enthaltenen Elemente abhängt. Dies führt dazu, dass zwei verschiedene Produkte bei gleichem Füllstand unter ansonsten gleichen Bedingungen (gleicher Behälter, gleiche Temp. etc.) unterschiedliche Absorptionsraten zeigen. Zum Beispiel zeigen Diät-Cola und klassische Cola einen Unterschied von etwa vier Prozent in der Absorptionsrate, was bedeutet, dass man zur Bestimmung der Füllhöhe unterschiedliche Schwellwerte eingeben muss, um ein einheitliches Resultat zu erhalten.

Bei der Hochfrequenz-Messmethode wird mittels eines hochfrequenten Schwingkreises die Bedämpfung durch den Füllstand gemessen. Der Füllstand verändert im Wesentlichen den kapazitiven Teil des Schwingkreises, d.h. Leitfähigkeit oder Dielektrizitätskonstante und Verlustwiderstand als Eigenschaften des Füllgutes oder Produktes beeinflussen neben dem Füllstand erheblich das Messergebnis. Auch hier müssen bei unterschiedlichen Produkten, z.B. bei zwei Mineralwässern mit unterschiedlichem Salzgehalt, verschiedene Schwellwerte zur Erzielung eines gleichen Füllstandergebnisses eingegeben werden.

Ein weiteres Verfahren zur Bestimmung der Füllhöhe von Flüssigkeiten in Flaschen ist in WO 98/21557 beschrieben, wobei hier das erhaltene Ergebnis u.a. vom Druck innerhalb der Flasche abhängt.

Aus WO 99/56094 ist es bekannt, den Füllstand von Behältern dadurch zu ermitteln, dass durch impulsartige Auslenkung der Behälterwand in dieser mechanische Schwingungen erzeugt werden und dann die Schwingungen analysiert werden, wobei die Abklingzeit, die Frequenz, die Intensität und/oder das Integral der Intensität oder der Ort der maximalen Intensität erfasst werden.

Noch ein weiteres Verfahren zur Bestimmung der Füllhöhe in Behältern ist aus WO 99/01722 bekannt, wobei hier die Füllhöhe mittels der von dem Behälter ausgehenden Wärmestrahlung bestimmt wird.

DE 19722837 A1 offenbart ein Verfahren zu Bestimmung des Füllstandes in Ölseperatortanks, mittels eines Gammastrahlen Dichteprofilsensors. In US 4423628 wird ein Verfahren zur Überprüfung der korrekten Füllhöhe von Getränken beschrieben, wobei die Behälter mit einer vorbestimmten Hochfrequenzleistung beaufschlagt werden.

In US 3818232 wird ein Verfahren und eine Vorrichtung für die Überwachung von automatisch befüllten Behältern beschrieben, um den durchschnittlichen Füllstand der Behälter zu ermitteln. Der Füllstand wird mit Hilfe von Strahlung, wie etwa Gammastrahlung bestimmt.

Aus DE 4115207 ist eine redundante Überfüllsicherung bekannt, die zur Begrenzung der Füllmenge von flüssigen Medien in offenen Behältern oder verflüssigter Gase in Druckbehältern eingesetzt werden kann.

Eine weitere Überfüllsicherung ist aus DE 4200603 bekannt, wobei hier Chargen beliebiger Medien vor Überfüllung geschützt werden, indem der Pegel des Behälterinhalts permanent mittels eines Schwimmers überwacht wird.

In CA2454748 wird ein Verfahren zur Bestimmung der Füllhöhe eines zu füllenden Containers beschrieben, wobei das Messverfahren auf der Auswertung der Laufzeit eines an der Oberfläche des Mediums reflektierten Hochfrequenz-Signals basiert.

Auch die Masse eines gefüllten Behälters kann auf unterschiedliche Weise ermittelt werden, nämlich direkt durch Wiegen des Behälters oder indirekt durch Messen der Absorption von Röntgenstrahlen unter Berücksichtigung des Volumens des Behälters.

Die Integrität von Produkten wird herkömmlicherweise mittels chemischer Analysen geprüft. Die Integrität des Produktes, insbesondere von Nahrungsmitteln, kann unabsichtlich durch Fehler im Produktionsverfahren oder absichtlich oder böswillig zerstört werden.

### Offenbarung der Erfindung

### Technisches Problem

Der Erfindung liegt die Aufgabe zugrunde, ein Verfahren zur Feststellung der Produktintegrität zu schaffen.

### Technische Lösung

Erfindungsgemäß wird diese Aufgabe durch das Verfahren gemäß Anspruch 1 gelöst.

Bei dem vorgegebenen Merkmal handelt es sich typischerweise um die Füllhöhe des Produktes in dem Behälter. Das erste Messverfahren kann dabei darin bestehen, dass die Füllhöhe mittels Röntgenstrahlung in der oben beschriebenen Weise ermittelt wird. Die Absorption der Röntgenstrahlung hängt wesentlich von dem Atomgewicht der in den Molekülen des Produktes vorhandenen Elemente ab. Das Ergebnis würde daher dadurch verfälscht, dass in dem untersuchten Produkt die Atomgewichte anders verteilt sind als in einem Referenz-Produkt, mit dem die Messmethode kalibriert

wurde. Unter Referenz-Produkt wird dabei das integere oder unverfälschte Produkt verstanden. Die zweite Messmethode kann darin bestehen, dass die Füllhöhez.B. mittels eines Lichtstrahls und optischer Sensoren oder einer Kamera gemessen wird. Der mit diesem Verfahren ermittelte Wert für die Füllhöhe ist unabhängig von den Atomgewichten der Elemente in dem Produkt. Die Werte der Füllhöhe, die mit beiden Messmethoden erhalten werden, werden verglichen. Ergibt sich ein Unterschied, so deutet dies darauf hin, dass die Verteilung der Atomgewichte in dem Produkt nicht dem unverfälschten Produkt entspricht und dass die Integrität des un-tersuchten Produktes nicht gegeben ist. Die zweite Messmethode kann z.B. die oben erwähnte Ermittlung der Füllhöhe mittels Hochfrequenz sein. Diese Methode muss ebenfalls mittels eines Referenz-Produkts ermittelt werden. Die zweite Messmethode kann in einer Massebestimmung durch Wiegen bestehen. Wenn sich in beiden Messmethoden ein unterschiedlicher Wert für die Masse des Produkts ergibt, so ist dies ein Hinweis auf die Verletzung der Integrität des Produktes.

Durch die Ermittlung ein und desselben Produktmerkmals mittels zweier verschiedener Messmethoden und durch Vergleich oder Korrelation der Messergebnisse lassen sich somit Verletzungen der Produktintegrität feststellen. In dem oben erwähnten Beispiel der Füllstandsermittlungen mittels Röntgenstrahlen und Hochfrequenz lassen sich durch Korrelation der Messergebnisse Leitfähigkeit, Dielektrizitätskonstante, Dichte oder chemische Zusammensetzung, sinnvoll zur Feststellung von Abweichungen der ursprünglichen Produktzusammensetzung nutzen. Diese physikalischen Eigenschaften werden bisher lediglich als Störgrößen angesehen. Ausgehend von der Tatsache, dass die beiden gemessenen Füllstände übereinstimmen müssen, kann man bei dieser Simultanmessung Abweichungen oder produktspezifischen Parameter sehr gut feststellen. Bei entsprechender Festlegung der Schwellwerte können somit schon einzelne Behälter mit wesentlich abweichenden Produktinhalten erkannt und ausgeleitet werden. Über Mittelwertbildung wird aufgrund der hohen Produktionszahlen (die Leistung der modernen Flaschenabfüllanlagen liegen heute bei 60.000 Flaschen pro Stunde) sehr schnell eine hervorragende statistische Genauigkeit erreicht; hierdurch wird der wesentliche Grundaspekt der Erfindung, die Detektion von Änderungen des abgefüllten Produktes im verschlossenen und bereits gesicherten Behälter, sei es durch Fehlproduktion oder mit Absicht verursacht, als Gefährdungspotenzial für eine breitere Käuferschicht sichergestellt.

Ein besonderer Vorteil der Erfindung liegt darin, dass die Integrität des Produktes in dem verschlossenen Behälter festgestellt werden kann. Getränkeflaschen können also mit angebrachtem Verschluss auf Integrität des Inhalts geprüft werden. Die Prüfung kann damit am Ende des Herstellungsprozesses geprüft werden.

Übrigens würden radioaktive Verseuchungen, die im Energiebereich 60 KeV strahlen - das ist der Energiebereich, im dem die Röntgenstrahlen-Messmethode arbeitet - auch über eine Mittelwertserhöhung gut erkannt werden.

Eine weitere Ausgestaltung beinhaltet eine zusätzliche Messung der Röntgenstrahlen-Absorption im unteren Teil des Behälters, sodass, unbeeinflusst vom Füllstand, Abweichungen in der chemischen Zusammensetzung auf Grund der Massezahlen der Atome erkannt werden können, und somit eine eindeutige Bestimmung des verursachenden Parameters ermöglicht wird. Die zusätzliche Messung erhöht natürlich auch die Messgenauigkeit der Gesamtvorrichtung. Ebenso ist es auch möglich, im wiederum unteren Teil des Behälters die Leitfähigkeit des Produktes mittels einer hochfrequenten Sende- und Empfangsvorrichtung zu bestimmen und dadurch Eindeutigkeit herzustellen.

Ein anderes Ausführungsbeispiel der Erfindung besteht darin, den Innendruck des Behälters mittels zweier verschiedener Messmethoden zu ermitteln, nämlich zum einen mittels des in WO 98/21557 beschriebenen Ultraschall-Verfahrens und zum anderen durch eine mechanische Druckprüfung, bei der PET-Flaschen mittels zweier seitlich angreifenden Riemenförderer gequetscht werden und über zwei Füllstandskontrollen der Füllstand im gequetschten und im nicht-gequetschten Zustand der PET-Flasche ermittelt wird, wobei am Auslauf der Riemenförderer mittels einer Kraftmessdose der erreichte Innendruck in den PET-Flaschen gemessen wird. Die Änderung des Füllstandes ist ein Maß für den in der Flasche herrschenden Druck. Der mit dem Ultraschallverfahren ermittelte Druckwert wird durch die Zusammensetzung des Gases im Kopfraum des Behälters beeinflusst, während der mit dem mechanischen Verfahren ermittelte Druckwert davon nicht beeinträchtigt wird.

Gleichzeitig kann durch die mechanische Druckprüfung eine eventuelle Undichtigkeit der PET-Flasche festgestellt werden. Die mechanische Druck-Prüfung kann auch zur weiteren Verfeinerung der Integritätsprüfung mit der Messung der Füllhöhe kombiniert werden, insbesondere bei Produkten, die nach dem Füllen und Verschließen der Behälter unterschiedlich schnell, z.B. in Abhängigkeit vom CO₂-Gehalt, Druck aufbauen.

Zusätzlich kann mittels einer Kamera, z.B. CCD-Kamera, oder des oben erwähnten Ultraschall-Verfahrens das Schaumverhalten des Produkts nach dem Abfüllen festgestellt und quantifiziert werden. Das Ergebnis kann mit den übrigen Messungen korreliert und in ein Gesamtbild eingebracht werden.

### Kurze Beschreibung von Zeichnungen

Ein Ausführungsbeispiel der Erfindung wird nachfolgend anhand der Zeichnung erläutert. Es zeigen:

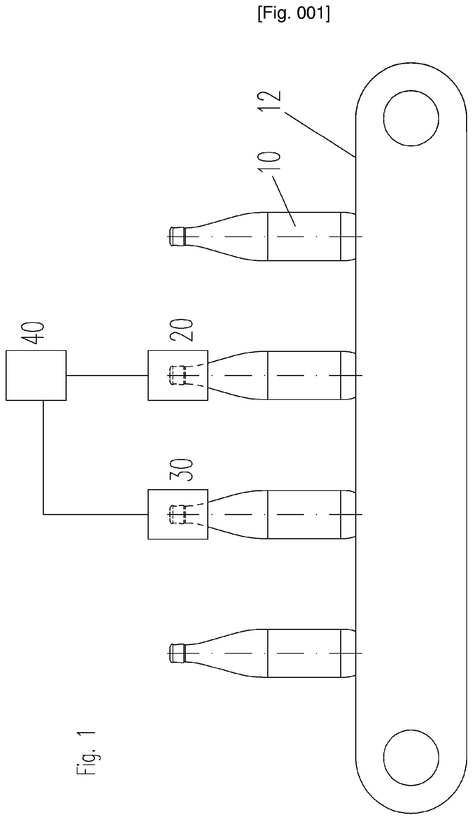

Fig. 1 in einer schematischen Darstellung eine Anlage zur Integritätsprüfung über die Messung der Füllstandshöhe;
Fig. 2 eine Einrichtung zur Messung der Füllstandshöhe mittels Röntgenstrahlen und
Fig. 3 eine Einrichtung zur Messung der Füllstandshöhe mittels Hochfrequenz.

In der Zeichnung ist schematisch eine Anlage zur Durchführung des erfindungsgemäßen Verfahrens dargestellt, wobei die Füllhöhe in Getränkeflaschen 10 mittels Röntgenstrahlen und mittels Hochfrequenz gemessen wird und die gemessenen Werte miteinander verglichen werden.

Die Flaschen 10 werden auf einem Transporteur 12, z.B. einem Gliederkettenförderer, zunächst durch eine erste Inspektionsstation 20 bewegt, in der die Füllhöhe mittels Röntgenstrahlen gemessen wird. Danach werden sie durch eine zweite Inspektionsstation 30 bewegt, die in geringem Abstand hinter der ersten Inspektionsstation 20 angeordnet ist und in der die Füllhöhe mittels Hochfrequenz gemessen wird. In einer Steuereinrichtung 40 werden die nach den beiden verschiedenen Messmethoden ermittelten Werte für die Füllhöhe miteinander verglichen. Wenn der Unterschied zwischen den beiden gemessenen Werten einen bestimmten Schwellwert übersteigt, so wird dies als Hinweis auf eine Verletzung der Integrität des in den Flaschen 10 enthaltenen Produktes, z.B. Getränkes, angesehen und die betreffende Flasche aus dem weiteren Produktionsablauf ausgesondert oder die gesamte Anlage stillgesetzt, um der möglichen Verletzung der Integrität des in den Flaschen 10 enthaltenen Getränkes nachzugehen.

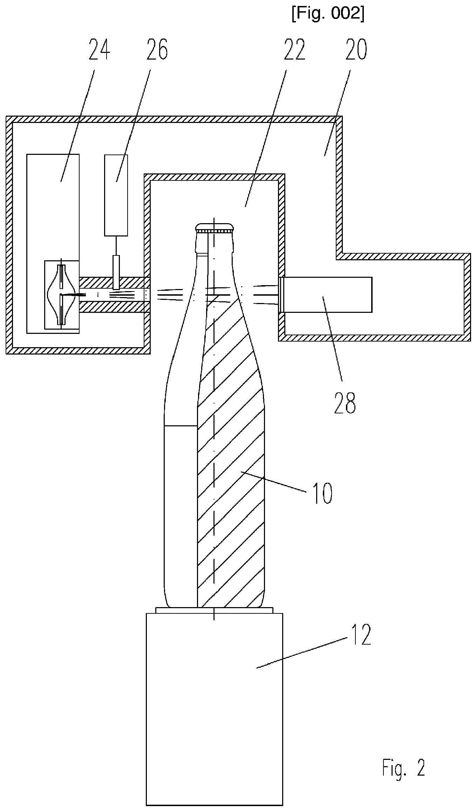

Fig. 2 zeigt mit Blick in Richtung des Transporteurs 12 im Schnitt die wesentliche Elemente der Inspektionsstation 20 zur Messung der Füllhöhe des Produktes in den Flaschen 10 mittels Röntgenstrahlenabsorption. Die Inspektionsstation 20 hat insgesamt Brückenform mit einem Durchlass 22, der etwa das obere Viertel der Getränkeflasche 10 aufnimmt. Auf der einen Seite des Durchlasses 22 sind eine Röntgenröhre 24 und ein beweglicher Verschluss 26 angeordnet. Auf der gegenüberliegenden Seite des Durchlasses 22 ist ein Röntgenstrahlendetektor 28 angeordnet. Die von der Röntgenröhre 24 erzeugten Strahlen sind auf den Röntgendetektor 28 gerichtet. Diese Messbrücke ist in einer solchen Höhe über dem Transporteur 12 angeordnet, dass der Soll-Füllstand sich etwa in der Mitte der Breite des Röntgen 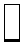 strahls befindet.

Das Messprinzip besteht darin, dass bei einem Füllstand über dem Soll-Füllstand ein größerer Anteil des Röntgenstrahls durch das Produkt, also das Getränk, hindurch läuft und dabei absorbiert wird, sodass der Röntgendetektor 28 eine geringere Strahlungsintensität misst. Umgekehrt wird bei einem niedrigen Füllstand eine höhere Strahlungsintensität gemessen.

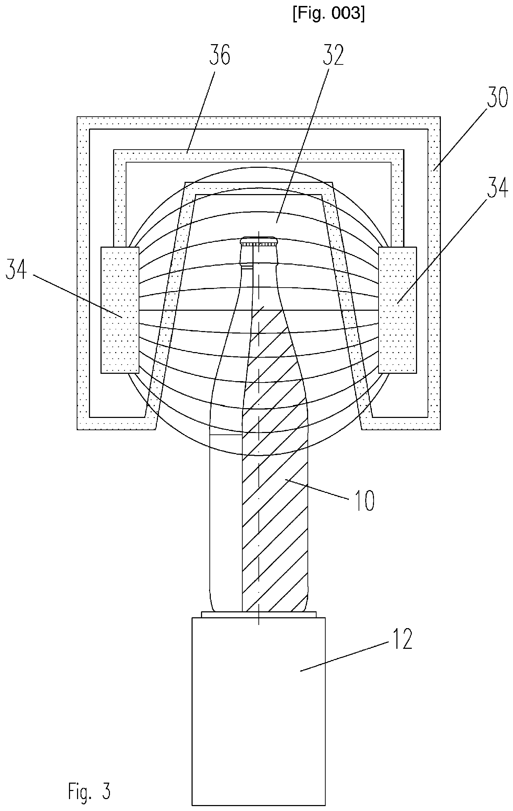

In Fig. 3 ist wiederum mit Blick in Transportrichtung die zweite Inspektionsstation 30 dargestellt, in der die Füllhöhe mittels Hochfrequenz gemessen wird. Der Messkopf hat wieder Brückenform mit einem Durchlass 32. Auf beiden Seiten des Durchlasses 32 befinden sich Kondensatorplatten 34, die Teil eines Schwingkreises 36 sind.

Das Messprinzip besteht darin, dass die Resonanzfrequenz des Schwingkreises 36 von der Dielektrizitätskonstante des Materials zwischen den Kondensatorplatten 34 abhängt. Beim Durchlauf einer Flasche wird die Kapazität des von den beiden Kondensatorplatten 34 gebildeten Kondensators von dem Anteil der verschiedenen Materialien und deren Dielektrizitätskonstanten bestimmt. Da Flüssigkeiten eine höhere Dielektrizitätskonstante als Luft haben, wird die Resonanzfrequenz des Schwingkreises 36 durch die Füllhöhe der Flüssigkeit in der Flasche 10 beeinflusst. Je höher der Füllstand ist, desto höher ist die effektive Elektrizitätskonstante zwischen den Kondensatorplatten 34, wodurch die Kapazität des Kondensators erhöht wird, was eine Verringerung der Schwingungsfrequenz zur Folge hat.

Da beide Messverfahren die Füllhöhe indirekt messen, nämlich über die Absorption der Röntgenstrahlung bzw. die Änderung der Resonanzfrequenz müssen beide Inspektionsstationen 20, 30 vor Beginn der Integritätsprüfung mittels einer oder mehrerer Flaschen mit vorgegebener, korrekter Füllhöhe und unverfälschtem Inhalt kalibriert werden.

Die Absorption der Röntgenstrahlen in Materie hängt von der Atomzahl der Elemente ab. Die von dem Detektor 28 gemessene Strahlungsintensität gibt daher nur dann die korrekte Füllhöhe an, wenn das Getränk innerhalb einer überprüften Flasche 10 in der Zusammensetzung seiner Elemente dem Getränk in der Referenzflasche entspricht, mittels der die Inspektionsstation 20 kalibriert wurde. Entsprechendes gilt für die zweite Inspektionsstation 30 bzgl. der Dielektrizitätskonstante des Getränks in der Flasche 10. Die Integrität des Produkts, d.h. Getränks, in der Flasche 10 lässt sich dadurch überprüfen, dass die Messwerte beider Inspektionsstationen 20, 30 in einer Steuerung 40 verglichen werden. Wenn beide Inspektionsstationen 20, 30 scheinbar unterschiedliche Füllhöhen anzeigen, so bedeutet dies, dass entweder das Atomgewicht der Elemente des Produkts, d.h. des Getränks, oder dessen Dielektrizitätskonstante oder beide Parameter vom Sollwert abweichen und damit das Produkt in der betreffenden Flasche 10 nicht den Vorgaben entspricht.

### Liste der Bezugszeichen:

10 Getränkeflasche
12 Transporteur
20 Inspektionsstation
22 Durchlass
24 Röntgenröhre
26 Verschluss
28 Röntgendetektor
30 Inspektionsstation
32 Durchlass
34 Kondensatorplatte
36 Schwingkreis
40 Steuereinrichtung

## Patentansprüche

1. Verfahren zur Feststellung der Integrität eines in einem verschlossenen Behälter (10) befindlichen Produkts der Nahrungsmittel- oder Getränkeindustrie, wobei ein vorgegebenes Merkmal des Produkts mit einer ersten Messmethode ermittelt wird, bei dem eine erste physikalische Eigenschaft des Produkts untersucht wird und wobei das vorgegebene Merkmal zusätzlich mindestens noch mittels einer zweiten Messmethode ermittelt wird, die auf einer zweiten physikalischen Eigenschaft basiert, die von der ersten physikalischen Eigenschaft abweicht und wobei die mittels der beiden Messmethoden erhaltenen Werte des vorgegebenen Merkmals miteinander verglichen werden und der Unterschied der Werte mit einem Schwellwert verglichen wird, wobei es als ein Hinweis auf eine Verletzung der Integrität des Produktes angesehen wird, wenn der Unterschied zwischen den beiden gemessenen Werten den Schwellwert übersteigt.

2. Verfahren, nach Anspruch 1, wobei das Produkt ein Getränk in einer Flasche (10) ist und das vorgegebene Merkmal die Füllhöhe ist und wobei die erste Messmethode darin besteht, dass die Füllhöhe mittels Absorption eines Röntgenstrahls gemessen wird und die zweite Messmethode darin besteht, dass die durch die Flasche bewirkte Änderung der Resonanzfrequenz eines Hochfrequenz-Schwingkreises (36) gemessen wird.

3. Verfahren nach Anspruch 2, wobei zusätzlich in einem Bereich deutlich unterhalb der Füllhöhe der Flasche mittels Röntgenstrahlung die Absorption durch das Produkt oder mittels Hochfrequenz die Dielektrizitätskonstante des Produkts bestimmt wird.

4. Verfahren nach einem der Ansprüche 1 bis 3, wobei die Mittelwerte des vorgegebenen Merkmals einer Mehrzahl von Produkten, die mit der ersten Messmethode ermittelt wurden, und die Mittelwerte dieses Merkmals, die mit der zweiten Messmethode ermittelt wurden, miteinander verglichen werden.

## Claims

1. A method of establishing the integrity of a product of the food and beverage industry located in a sealed container (10), wherein a given feature of the product is ascertained by a first measurement method, wherein a first physical property of the product is examined and wherein the given feature additionally is ascertained by at least a second measurement method which is based on a second physical property which is different from the first physical property and wherein the values ascertained by the two measurement methods are compared with each other and the difference between the two values is compared with a threshold value, wherein it is considered as an indicator on the violation of the integrity of the product, if the difference of the ascertained values exceeds the threshold value.

2. The method according to claim 1, wherein the product is a drink in a bottle (10) and the given feature is the fill level and wherein the first measurement method includes measuring the fill level by means of absorption of an X-ray beam and the second measurement method includes measuring the change effected by the bottle in the resonant frequency of a high-frequency oscillating circuit (36).

3. The method according to claim 2, wherein additionally in an area clearly below the fill level of the bottle the absorption by the product by means of X-radiation or the dielectric constant of the product by means of high frequency is ascertained.

4. The method according to one of claims 1 to 3, wherein the average value of the given feature of a plurality of products, which have been ascertained with the first measurement method, and the average values of this feature, which have been ascertained with the second measurement method are compared with each other.

## Revendications

1. Procédé pour vérifier l'intégrité d'un produit de l'industrie alimentaire ou de l'industrie des boissons contenu dans un récipient (10) fermé, dans lequel une caractéristique prédéfinie du produit est déterminée au moyen d'un premier procédé de mesure, selon lequel une première propriété physique du produit est examinée et dans lequel la caractéristique prédéfinie est déterminée en plus au moins encore au moyen d'un second procédé de mesure, qui se base sur une seconde propriété physique, qui diffère de la première propriété physique, et dans lequel les valeurs de la caractéristique prédéfinie obtenues au moyen des deux procédés de mesure sont comparées l'une à l'autre et la différence entre les valeurs est comparée à une valeur seuil, dans lequel cela est considéré comme une indication d'une atteinte à l'intégrité du produit quand la différence entre les deux valeurs mesurées dépasse la valeur seuil.

2. Procédé selon la revendication 1, dans lequel le produit est une boisson dans une bouteille (10) et la caractéristique prédéfinie est la hauteur de remplissage et dans lequel le premier procédé de mesure consiste en ce que la hauteur de remplissage est mesurée au moyen de l'absorption d'un rayon X et le second procédé de mesure consiste en ce que la modification, causée par la bouteille, de la fréquence de résonance d'un circuit oscillant haute fréquence (36) est mesurée.

3. Procédé selon la revendication 2, dans lequel l'absorption par le produit est déterminée au moyen d'un rayonnement X ou la constante diélectrique du produit est déterminée au moyen d'une haute fréquence en plus dans une zone sensiblement en dessous de la hauteur de remplissage de la bouteille.

4. Procédé selon l'une des revendications 1 à 3, dans lequel les valeurs moyennes de la caractéristique prédéfinie d'une pluralité de produits, qui ont été déterminées par le premier procédé de mesure, et les valeurs moyennes de cette caractéristique, qui ont été déterminées par le second procédé de mesure, sont comparées les unes aux autres.
